# EUROPÄISCHE PATENTSCHRIFT

(11) **EP 3 210 852 B1**
(45) Veröffentlichungstag und Bekanntmachung des Hinweises auf die Patenterteilung: **03.04.2019**
(21) Anmeldenummer: 17000311.5
(22) Anmeldetag: 27.02.2017
(51) Int. Cl.: B62D 5/06, B62D 5/093

(54) **BAUMASCHINE MIT EINER LENKEINRICHTUNG UND VERFAHREN ZUM LENKEN EINER BAUMASCHINE**
CONSTRUCTION MACHINE WITH A STEERING DEVICE AND METHOD FOR STEERING A CONSTRUCTION MACHINE
ENGINE DE CONSTRUCTION AVEC UN DISPOSTIF DE DIRECTION ET PROCÉDÉ POUR LA DIRECTION D'UN ENGINE DE CONSTRUCTION

(30) Priorität: 29.02.2016 DE 102016002443
(43) Veröffentlichungstag der Anmeldung: 30.08.2017
(73) Patentinhaber: BOMAG GmbH, 56154 Boppard (DE)
(72) Erfinder: Christ, Hermann, 56288 Bubach (DE); Berenz, Andreas, 56823 Büchel (DE)
(74) Vertreter: Heidler, Philipp

(56) Entgegenhaltungen:
- DE-A1- 1 755 387
- DE-A1-102010 035 270

## Beschreibung

Die Erfindung betrifft eine Baumaschine, insbesondere Straßenbaumaschine, die eine Lenkeinrichtung aufweist, die Lenkeinrichtung umfassend ein Lenkelement zur manuellen Eingabe von Lenkbefehlen, einen Lenkaktor zum Antrieb einer Lenkeinstellung einer Lenkvorrichtung eines Fahrwerks der Baumaschine und eine Übertragungseinrichtung, die zwischen dem Lenkelement und dem Lenkaktor angeordnet ist, wobei die Übertragungseinrichtung ein Aktororbitrol zum Antrieb des Lenkaktors aufweist. Die Erfindung betrifft ferner ein Verfahren zum Lenken einer Baumaschine.

Bei der Bedienung mobiler Arbeitsmaschinen, insbesondere Baumaschinen, kommt der Ausführung der Lenkeinrichtung wesentliche Bedeutung zu, um beispielsweise ein genaues und zuverlässiges Manövrieren der mobilen Arbeitsmaschine zu ermöglichen. Typische Lenkungen, die hier häufig auftreten, sind beispielsweise Achsschenkellenkungen, Knicklenkungen oder Schemellenkungen. Die Eingabe der Lenkbewegungen erfolgt typischerweise durch den Bediener der Baumaschine über ein Lenkelement zur manuellen Eingabe von Lenkbefehlen. Dies kann beispielsweise ein Lenkrad oder ein Lenkhebel sein, der in oder auf einem Fahrstand der lenkbaren Maschine angeordnet ist. Die vorliegende Erfindung befasst sich mit der Übertragung von Lenkbefehlen von der manuellen Lenkeingabestelle (Lenkelement) hin zum gelenkten Fahrwerksteil, wie beispielsweise Rädern oder einem Knickgelenk.

In diesem Zusammenhang ist es bekannt, beispielsweise auf rein mechanische, elektrische oder elektrohydraulische Übertragungseinrichtungen zurückzugreifen. Dabei sind bei der Auslegung solcher Systeme gleichzeitig mehrere Aspekte zu berücksichtigen. Neben der allgegenwärtigen Auflage, möglichst günstige und funktionszuverlässige Systeme zu entwickeln, stellt sich bei Lenkungen insbesondere die Herausforderung einer präzisen Befehlsweiterleitung von der Eingabestelle der Lenkung bis zum gelenkten Fahrwerksteil. Gleichzeitig ist aber auch eine Kraftrückmeldung (*force* feedback) gewünscht, um dem Bediener Informationen über die während des Lenkvorgangs vorherrschende Situation zu geben.

Aus diesen Gründen ist es bereits bekannt, für eine solche Lenkeinrichtung auf ein Aktororbitrol zurückzugreifen, das über eine Lenkachse oder eine Lenkachse in Verbindung mit einem Getriebe angetrieben wird. Ein Aktororbitrol bezeichnet vorliegend ein Bauteil, welches beispielsweise ein Servostat ist, der genutzt wird, die Verstellung eines Lenkaktors anzutreiben. Der Lenkaktor ist letztendlich ein Antriebselement, welches die Verstellbewegung der zu lenkenden Fahreinrichtungen, wie beispielsweise Rädern, antreibt. Dies kann beispielsweise insbesondere ein Hydraulikzylinder, speziell einen doppeltwirkender Hydraulikzylinder, oder ein Hydraulikmotor sein. Der Vorteil bei der Verwendung eines Aktororbitrols ist insbesondere der Umstand, dass das Aktororbitrol eine mechanisch hydraulische Verstärkung zum Lenkaktor hin ermöglicht, so dass die letztendlich am Lenkelement aufzubringenden Lenkkräfte verringert werden können. Insgesamt stellt das Orbitrol vorliegend somit eine mechanisch hydraulische Verstärkungseinrichtung dar. Unter einem Orbitrol wird vorliegend somit insbesondere eine Wirkungseinheit aus Lenkventil (üblicherweise ein Drehschieberventil) und einer Dosiereinheit/einem Verdränger (beispielsweise eine Zahnringmaschine, insbesondere in Form einer Gerotormaschine oder einer Orbitalmaschine) und einem Anschluss an eine externe hydraulische Druckquelle, beispielsweise eine Pumpe oder einen Druckspeicher, verstanden, bei dem als Reaktion auf eine eingangsseitige Drehbewegung durch das Lenkventil externe hydraulische Energie der Dosiereinheit zugeführt wird und sich diese infolgedessen in Rotation versetzt. Durch eine mechanische Verbindung der Dosiereinheit mit dem Lenkventil, beispielsweise Drehschiebeventil, erfolgt die Drehbewegung so lange, bis das Ventil wieder die externe hydraulische Energie unterbricht. Aus der DE 1 755 387 A1 ist eine Lenkeinrichtung, so wie dargestellt im Oberbegriff des Anspruchs 1, insbesondere für schwere Fahrzeuge, bekannt, bei der zwei hydrostatische Systeme hintereinander geschaltet sind, der Arbeitsmotor des ersten Systems als Betätigungsvorrichtung auf den Steuerteil des zweiten Systems einwirkt und der Arbeitsmotor des zweiten Systems mit den umzulenkenden Teilen verbunden ist.

Insbesondere bei Baumaschinen bereitet die Auslegung der Lenkeinrichtung häufig Probleme. Aufgrund der spezifischen Anforderungen an die Bedienung von Baumaschinen weisen diese häufig Fahrstände mit verstellbarem Bedienarbeitsplatz auf. Dies stellt besondere Anforderungen an die Auslegung der Lenkeinrichtung, da sichergestellt werden muss, dass über das Lenkelement aus den jeweiligen Positionen des Bedienarbeitsplatzes heraus zuverlässige Lenkeingaben erfolgen können und eine präzise Weiterleitung der Lenkeingaben bis hin zum Lenkaktor gewährleistet ist. Baumaschinen, bei denen derartige Bedienarbeitsplatz häufig verwendet werden, sind insbesondere Walzen, speziell Gummiradwalzen oder knick- oder schemelgelenkte Tandemwalzen, Radstraßenfertiger und Straßenfräsen. Neben Schiebeverstellungen, insbesondere quer zur Arbeitsrichtung der Baumaschine, sind auch Drehbewegungen des Bedienarbeitsplatz häufig gewünscht, bei denen der Bedienarbeitsplatz, idealerweise zusammen mit dem Lenkelement, um eine vertikaler Drehachse verdreht werden. Dies dient häufig zur Verbesserung der Sichtverhältnisse und/oder zur Komfortverbesserung für den Bediener der Baumaschine während des Arbeitsprozesses. Eine solche Lösung ist beispielsweise in der DE102010035270A1 beschrieben. Dort ist die Möglichkeit offenbart, den Bedienarbeitsplatz quer zur Vorwärtsrichtung von einer rechten Positionen in eine linke Positionen und/oder eine mittige Position zu verfahren, um beispielsweise baustellenspezifischen Eigenheiten gerecht zu werden. Die Schnittstelle innerhalb der Übertragungseinrichtung zur Weiterleitung der Lenkbefehle zwischen dem bewegbarem Bedienarbeitsplatz und dem Rest der Maschine wird über eine entsprechende Mechanik ermöglicht.

Ausgehend von diesem Stand der Technik ist es nun die Aufgabe der Erfindung, eine gattungsgemäße Lenkeinrichtung weiter zu optimieren und insbesondere weiter auf die speziellen fahrstandspezifischen Bedürfnisse von Baumaschinen anzupassen.

Die Lösung der Aufgabe gelingt mit einer Baumaschine sowie einem Verfahren zum Lenken einer Baumaschine gemäß den unabhängigen Ansprüchen. Bevorzugte Weiterbildungen sind in den abhängigen Ansprüchen angegeben.

Ein wesentlicher Grundgedanke der Erfindung liegt darin, dass ergänzend zum Aktororbitrol ein Vorschaltorbitrol vorhanden ist, wobei das Vorschaltorbitrol zwischen dem Lenkelement und dem Aktororbitrol derart angeordnet ist, dass es einerseits vom Lenkelement angetrieben wird und andererseits, zumindest indirekt, das Aktororbitrol antreibt. Was konkret unter einem Orbitrol zu verstehen ist, ist im Absatz [0004] angegeben. Damit sind vom Lenkelement zum Lenkaktor hin zwei Orbitrole in Reihe angeordnet. Das Vorschaltorbitrol wirkt somit als Antrieb der Verstellbewegung für das Aktororbitrol. Dadurch wird eine funktional hintereinanderliegende Anordnung zweier einander nachgeschalteter Verstärkerelemente (Orbitrole) erhalten, wodurch einerseits die vom Bediener manuell am Lenkelement aufzubringende Kraft aufgrund der verstärkenden Funktion des Vorschaltorbitrols nur sehr gering sein muss. Andererseits bleibt im Gegensatz zu beispielsweise einer Steer-by-Wire-Lösung eine geschlossene Energieübertragungskette vom Lenkelement bis hin zum Lenkaktor und wieder zurück zum Lenkelement erhalten, so dass der Bediener in Fahrsituationen für ihn relevante Informationen zurückbekommt. Dies betrifft insbesondere das Erreichen des maximalen Lenkwinkels sowie ein Drehmomentanstieg, wenn die Rotationsgeschwindigkeit des Lenkelementes und die damit einhergehende vom Aktororbitrol geförderte Ölmenge die von der Pumpe zur Verfügung gestellte Hilfsenergie in Form einer Ölmenge übersteigt (sogenannter "Catch the Pump"-Effekt). Das Vorschaltorbitrol fungiert somit als eine Art Vorsteuerstufe zwischen dem Lenkrad und dem Aktororbitrol.

Vorzugsweise ist das Vorschaltorbitrol mit dem Aktororbitrol über einen geschlossenen Hydraulikkreis bzw. einen Hydrostaten wirkverbunden. Wirkverbunden ist dabei so zu verstehen, dass der durch die Bedienung des Vorschaltorbitrols ausgelöste Hydraulikfluidstrom genutzt wird, das Aktororbitrol zur Betätigung des Lenkaktors zu verstellen. Dies gelingt besonders gut, wenn zum Antrieb des Aktororbitrols durch das Vorschaltorbitrol ein Hydromotor vorhanden ist, der in hydraulischer Leitungsverbindung mit dem Vorschaltorbitrol steht, und der abtriebsseitig eine Bewegungsübertragungseinrichtung, insbesondere eine Welle oder ein Getriebe, zum Aktororbitrol hin aufweist. In dem geschlossenen Hydraulikkreis stellen das Vorschaltorbitrol somit von der Wirkung her ein Pumpe und der Hydromotor den Verbraucher dar.

Vorzugsweise ist ferner eine Einrichtung zur Druckvorspannung als Teil des geschlossenen Hydraulikkreises vorgesehen. Diese Einrichtung zur Druckvorspannung kann insbesondere Druckbegrenzungsventile und/oder Rückschlagventile umfassen, in die paarweise einander entgegengesetzt wirkend zwischen zwei Leitungsverbindungen zum Hydromotor angeordnet sind.

Die Versorgung der Einrichtung zur Druckvorspannung mit Hydraulikfluid erfolgt vorzugsweise über eine Pumpe, insbesondere eine Lenkpumpe. Bei dieser Pumpe kann es sich insbesondere um eine Konstantpumpe oder um eine geregelte Verstellpumpe handeln. Die konkrete Anbindung der Pumpe an den geschlossenen Hydraulikkreislauf kann ebenfalls variieren.

Auch die Hydraulikfluidversorgung des Vorschaltorbitrol und des Aktororbitrols kann variieren. So ist es insbesondere möglich, sowohl das Vorschaltorbitrol als auch das Aktororbitrol über eine gemeinsame Pumpe zu versorgen. Es kann jedoch bevorzugt sein, wenn das Vorschaltorbitrol und das Aktororbitrol über getrennte Pumpen bzw. Lenkpumpen versorgt werden. In diesem Fall sind somit wenigstens zwei Pumpen vorhanden, wobei die beiden der wenigstens zwei Pumpen jeweils entweder das Vorschaltorbitrol oder das Aktororbitrol (neben gegebenenfalls weiteren Verbrauchern) versorgen. Pumpe

Vorzugsweise sind die Nennweiten von Verbindungsleitungen vom Aktororbitrol zum Lenkaktor um wenigstens den Faktor 1,5, insbesondere um wenigstens den Faktor 2 und ganz besonders um wenigstens den Faktor 3, größer als die Nennweiten von Verbindungsleitungen im geschlossenen Hydraulikkreis zwischen Vorschaltorbitrol und Aktororbitrol bzw. einem das Aktororbitrol antreibenden Hydraulikmotor. Beispielhafte verwendete Nennweiten liegen für die hydraulischen Verbindungsleitungen zwischen dem Vorschaltorbitrol und dem Aktororbitrol bzw. dem das Aktororbitrol antreibenden Motor bei 6 mm und für die hydraulischen Verbindungsleitungen zwischen dem Aktororbitrol und dem Lenkaktor bei 12 mm. Dadurch kann für vergleichsweise weite Übertragungswege auf verhältnismäßig kleine Nennweiten und damit preiswerte Schlauchverbindungen zurückgegriffen werden, wohingegen dort, wo große Kräfte/Drehmomente übertragen werden müssen, konkret im Leistungsteil zwischen Aktororbitrol und Lenkaktor, die Wege kurz gehalten werden können und damit der Materialeinsatz von kostenintensiven Hydraulikschläuchen mit großen Nennweiten klein gehalten werden kann.

Unabhängig davon wird bevorzugt für die Hydraulikschläuche zur Übertragung zwischen dem Vorschaltorbitrol zum Aktororbitrol bzw. dem dieses antreibenden Element auf Hydraulikschläuche der sogenannten "leichten Reihe" zurückgegriffen und für die Leitungsverbindungen zwischen dem Aktororbitrol und dem Lenkaktor auf Hydraulikschläuche der sogenannten "schweren Reihe". Zur Bedeutung und Festlegung der Begriffe "leichte Reihe" (L-Reihe) und "schwere Reihe" (S-Reihe) wird auf die DIN 20066:2012-01 verwiesen. Die Hydraulikschläuche der "leichten Reihe" sind in der Regel kostengünstiger, wohingegen die Hydraulikschläuche der "schweren Reihe" druckfester sind.

Die Vorteile der Erfindung treten dann besonders deutlich hervor, wenn eine fixe Anordnung der gesamten Lenkeinrichtung an der lenkbaren Maschine, wie es beispielsweise bei verstellbaren Fahrständen bzw. Bedienarbeitsplätzen der Fall ist, nicht möglich ist. Es kann dann auf verhältnismäßig komplizierte und kostenintensive mechanische oder elektrische Übertragungslösungen verzichtet werden. Dadurch, dass das Vorschaltorbitrol über Hydraulikleitungen in Signalverbindung mit dem Aktororbitrol steht, können diese Hydraulikleitungen aufgrund ihrer flexiblen Eigenschaften bei der Verstellung des Fahrstandes beziehungsweise des Bedienarbeitsplatzes relativ zum Maschinenrahmen einfach mitgeführt werden, ohne dass hierzu weitergehende Anpassungen der Lenkeinrichtungen erforderlich sind. Dies ist insbesondere durch die erfindungsgemäße Verwendung der Schläuche der "leichten Reihe" gegeben. Dies gelingt besonders gut, wenn das Vorschaltorbitrol eine mit dem Lenkelement zusammenhängende Baueinheit bildet. Unter einer zusammenhängenden Baueinheit wird konkret eine Gesamtheit verstanden, die zusammen ein eigenständiges und als Ganzes wirkendes Modul bildet. Dies erleichtert insbesondere die Installation der erfindungsgemäßen Lenkeinrichtung.

Die Vorteile der erfindungsgemäßen Lenkeinrichtung treten insbesondere in einer Baumaschine, speziell einer Straßenbaumaschine, besonders deutlich hervor. Gegenstand der Erfindung ist daher eine Baumaschine, insbesondere eine Straßenbaumaschine, mit einer erfindungsgemäßen Lenkeinrichtung. Dabei kommen vorliegend insbesondere Baumaschinen vom Typ Walze, insbesondere knickgelenkte oder schemelgelenkte Tandemwalze, Straßenfräse, insbesondere Großfräse vom Mittelrotortyp oder Kleinfräse, Radstraßenfertiger, Stabilisierer und/oder Recycler, sowie Gummiradwalzen in Betracht.

Die erfindungsgemäße Baumaschine umfasst einen Fahrstand, der in Bezug auf eine aktuelle Bedienposition wenigstens teilweise zwischen zwei alternativen Bedienpositionen verstellbar ist. Der Fahrstand bezeichnet denjenigen Teil der Baumaschine, auf oder in dem sich ein Nutzer der Baumaschine während des Arbeitsprozesses aufhält und von dort Lenk- und Antriebsbefehle vorgibt. In Abhängigkeit von der konkreten Arbeitssituation kann es vorkommen, dass der Bediener alternative Bedienpositionen innerhalb des Fahrstandes einnehmen möchte. Damit er aus den verschiedenen Positionen heraus die Baumaschine nach wie vor zuverlässig steuern kann, sind Elemente des Fahrstandes, insbesondere das Lenkelement und/oder eine einen Fahrersitz umfassend Gesamtheit verstellbar ausgebildet. Es ist auch möglich, dass Lenkelement und den Fahrersitz als gemeinsam verstellbare Gesamtheit, beispielsweise über eine geeignete verstellbare Plattform, einen Verschiebeschlitten etc., auszubilden. Derartige Lösungen sind grundsätzlich im Stand der Technik bekannt. Die erfindungsgemäße Lenkeinrichtung eignet sich insbesondere zum Einsatz in einer Baumaschine mit einem verstellbaren Fahrstand, bei dem wenigstens das Lenkelement quer zur Arbeitsrichtung der Baumaschine verstellbar, insbesondere verschiebbar ist, insbesondere zusammen mit einem Fahrersitz. Dadurch, dass die hydraulische Übertragungsverbindung zwischen dem Vorschaltorbitrol und dem Aktororbitrol flexible Hydraulikleitungen umfasst, kann auf aufwendige Anpassungsmaßnahmen der Lenkeinrichtung an die verschiedenen Positionen des Lenkelements verzichtet werden, insbesondere, wenn das Vorschaltorbitrol mit dem Lenkelement, beispielsweise bei gemeinsamer Modulbauweise, mitgeführt wird. Verstellbewegungen des Lenkelementes bzw. des Vorschaltorbitrols gegenüber dem Aktororbitrol werden durch die flexiblen Hydraulikleitungen oder zumindest flexible Bereiche der Hydraulikleitungen ausgeglichen. Es kann ergänzend oder alternativ auch vorgesehen sein, dass das Lenkelement um eine Vertikalachse verschwenkbar ist. Das Lenkelement ist erfindungsgemäß Teil einer Bedienplattform oder eines Bedienschlittens, insbesondere umfassend einen Fahrersitz. Zur Bereitstellung der wenigstens zwei alternativen Bedienpositionen ist daher auch vorgesehen, dass der Bedienschlitten oder die Bedienplattform zusammen mit dem Lenkelement als Ganzes zwischen den wenigstens zwei Bedienpositionen verstellt wird, insbesondere quer zur Arbeitsrichtung der Baumaschine und/oder um eine vertikaler Achse verschwenkbar. Auch hier ist es vorgesehen, dass die Verstellbewegungen des Lenkelementes durch die flexiblen Hydraulikleitungen bzw. zumindest flexible Teilbereiche der Hydraulikleitungen zwischen dem Vorschaltorbitrol und dem Aktororbitrol bzw. dem Antrieb des Aktororbitrols ausgeglichen werden. Damit kann auf vergleichsweise einfache Art und Weise gewährleistet werden, dass eine zuverlässige Übertragung der durch das Lenkelement eingegebenen Lenkbefehle über das Vorschaltorbitrol zum Aktororbitrol aus den verschiedenen Bedienpositionen des Lenkelements heraus erfolgt, ohne dass hierzu baulich aufwendige Anpassungsmaßnahmen erforderlich sind.

Erfindungsgemäß ist das Vorschaltorbitrol in die Bedienplattform oder den Bedienschlitten integriert und wird somit bei einer Verstellung der Bedienplattform oder des Bedienschlittens mitgeführt.

Das Aktororbitrol ist dagegen bevorzugt außerhalb des Fahrstandes, insbesondere in seiner Relativposition ortsfest zum Antriebsmotor der Baumaschine und/oder im Motorraum und/oder am Maschinenrahmen angeordnet.

Die Pumpe des Vorschaltorbitrols und/oder des Aktororbitrols wird bevorzugt über einen Pumpenverteilergetriebe oder einen Nebenabtrieb des Antriebsmotors angetrieben.

Ein weiterer Aspekt der Erfindung liegt schließlich in einem Verfahren zum Lenken einer erfindungsgemäßen Baumaschine mit einer erfindungsgemäßen Lenkeinrichtung. Wesentlich an dem erfindungsgemäßen Verfahren ist das Zusammenspiel der beiden zwischen dem Lenkelement und dem Lenkaktor in Reihe angeordneten Orbitrole "Vorschaltorbitrol" und "Aktororbitrol". Durch die manuelle Lenkeingabe über das Lenkelement erfolgt zunächst ein Aufnehmen, Verstärken und Weiterleiten des manuellen Lenkeingabesignals durch das Vorschaltorbitrol. Von dem vom Verdränger des Vorschaltorbitrols in den geschlossenen Kreis geförderten Hydraulikfluidstrom wird zumindest indirekt das Aktororbitrol, beispielsweise über einen geeigneten Hydromotor, angetrieben. Das Aktororbitrol wiederum treibt die Verstellung des Lenkaktors an, bevorzugt in erneut verstärkter Weise bzw. Stellkraft. Das vorliegende erfindungsgemäße Verfahren ermöglicht somit eine besonders effiziente Umsetzung der über das Lenkelement erfolgten manuellen Eingabe von Lenkbefehlen hin zur Verstellbewegung des Lenkaktors, wobei insbesondere auch eine schrittweise Verstärkung der Stellkräfte vom Lenkelement zum Lenkaktor hin möglich und gewünscht ist. Gleichzeitig bleibt aber noch die Möglichkeit einer fühlbaren Rückmeldung (*force feedback*) erhalten.

Die Erfindung wird nachstehend anhand der in den Figuren angegebenen Ausführungsbeispiele näher veranschaulicht. Es zeigen schematisch:
Figur 1: eine Großfräse in Seitenansicht;
Figur 2: eine Kompaktfräse in Seitenansicht;
Figur 3: einen Stabilisierer/Recycler in Seitenansicht;
Figur 4: eine Gummiradwalze in Seitenansicht;
Figur 5: eine knickgelenkte Tandemwalze in Seitenansicht;
Figur 6: einen Radstraßenfertiger in Seitenansicht;
Figur 7: eine Prinzipskizze einer Lenkeinrichtung eines ersten Ausführungsbeispiels;
Figur 8: eine Prinzipskizze eines verstellbaren Fahrstandes mit der Lenkeinrichtung aus Fig. 7;

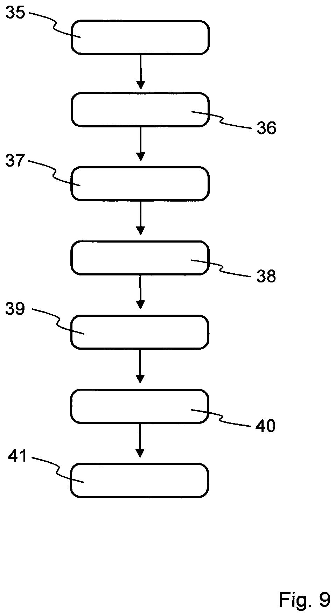

Figur 9: ein Ablaufdiagramm eines erfindungsgemäßen Verfahrens.

Gleiche Bauteile sind den Figuren mit gleichen Bezugszeichen bezeichnet, wobei nicht jedes sich in den Figuren wiederholende Bauteil in jeder Figur bezeichnet sein muss.

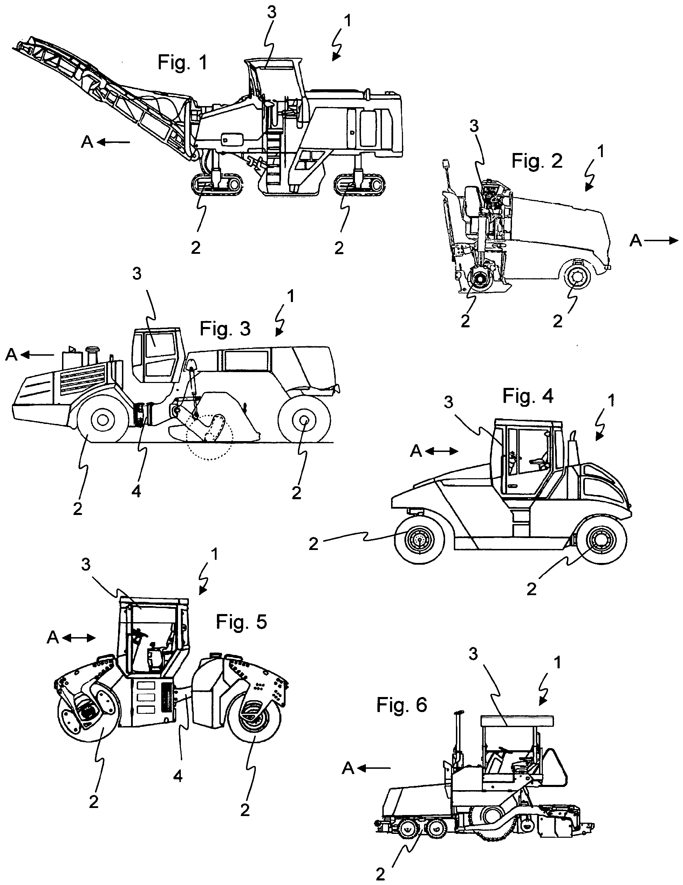

Die Figuren 1 bis 6 veranschaulichen zunächst verschiedene Baumaschinen 1 mit einer erfindungsgemäßen Lenkeinrichtung (in den Figuren 1 bis 6 nicht dargestellt). Sämtliche der Baumaschinen 1 umfassen Fahreinrichtungen 2, die über wenigstens einen Lenkaktor (in den Figuren 1 bis 6 nicht gezeigt) lenkbar sind. Ferner ist jeweils einen Fahrstand 3 vorhanden, von dem aus die Bedienung der Baumaschine 1 erfolgt. Die Arbeitsrichtung ist jeweils mit dem Pfeil A angegeben. Sämtliche der in den Figuren 1 bis 6 gezeigten Baumaschinen 1 umfassen einen Antriebsmotor, der die für den Betrieb erforderliche Antriebsleistung zur Verfügung stellt, und sind selbstfahrend ausgebildet.

Konkret zeigt Figur 1 eine Straßenfräse vom Typ Großfräse. Bei den Fahreinrichtungen 2 handelt es sich um Kettenlaufwerke, die über Hubsäulen mit dem Maschinenrahmen verbunden sind. Bei diesem Maschinentyp sind sowohl die vorderen als auch die hinteren Fahreinrichtungen 2 lenkbar.

Figur 2 veranschaulicht eine Kompaktfräse bzw. Kleinfräse mit offenem Fahrstand 3. Hier sind ebenfalls die vorderen Räder lenkbar, wobei auch Maschinen bekannt sind, die ergänzend eine Lenkung wenigstens eines der hinteren Räder zulassen.

Figur 3 zeigt einen Stabilisierer/Recycler. Die Lenkung erfolgt über eine Knicklenkung 4 zwischen dem Vorderteil und dem Hinterteil des Stabilisierers/Recyclers. Ferner ist das hintere Radpaar, beispielsweise über eine Achsschenkellenkung, ebenfalls lenkbar.

Bei der Gummiradwalze gemäß Figur 4 sind die vorderen und/oder die hinteren Fahreinrichtungen 2 lenkbar. Im Arbeitsbetrieb bewegt sich die Gummiradwalze alternierend in Vorwärts- und Rückwärtsrichtung.

Bei der in Figur 5 gezeigten Tandemwalze erfolgt die Lenkung über ein zwischen dem Vorderwagen und dem Hinterwagen angeordnetes Knickgelenk. Alternativ kann anstelle der Knicklenkung auch für die vordere und die hintere Fahreinrichtung jeweils eine Schemellenkung vorgesehen sein.

Beim Straßenfertiger der Figur 6 schließlich sind die beiden an einer Tandemachse aufgehängten Räder über einen Lenkaktor lenkbar.

Bei den vorstehend genannten Maschinen können selbstverständlich auch mehrere Lenkaktoren vorhanden sein, die allerdings in der Regel gemeinsam vom Lenkelement angesteuert werden.

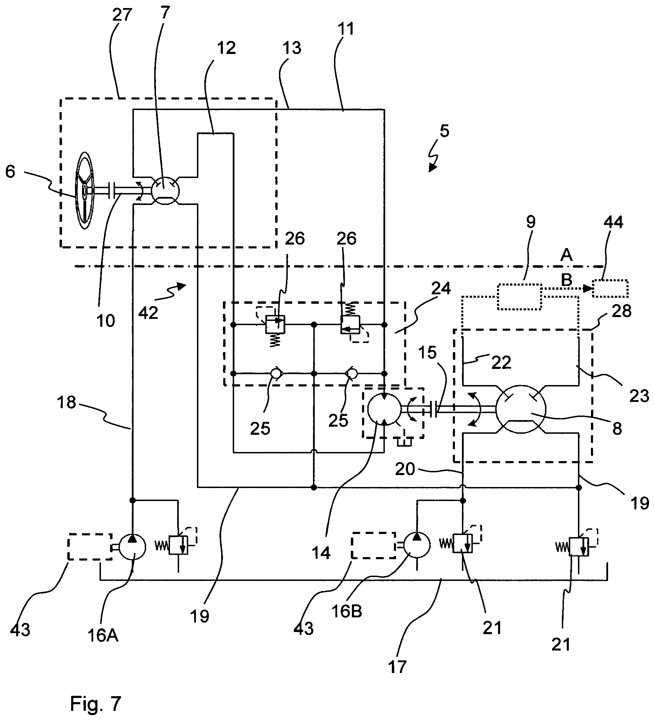

Figur 7 veranschaulicht den prinzipiellen Aufbau einer erfindungsgemäßen Lenkeinrichtung 5. Wesentliche Elemente der Lenkeinrichtung 5 sind ein Lenkelement 6, im vorliegenden Ausführungsbeispiel konkret ein Lenkrad, ein Vorschaltorbitrol 7, ein Aktororbitrol 8 sowie einen Lenkaktor 9. Der Lenkaktor 9 ist beispielsweise ein Hydraulikzylinder, der die Verstellung einer Lenkvorrichtung 44, beispielsweise eines Knickgelenks, einer Achsschenkellenkung oder einer Drehschemellenkung, antreibt. Figur 7 verdeutlicht dabei, dass vom Lenkelement 6 kommend das Vorschaltorbitrol 7, das Aktororbitrol 8 und der Lenkaktor 9 in Reihe angeordnet sind. Das Vorschaltorbitrol 7, das Aktororbitrol 8 und des zwischengeschaltete Hydrauliksystem bilden somit eine verstärkende Übertragungseinrichtung 42. Durch diese Anordnung wird eine Art hydraulische Fernsteuerung des Lenkaktors 9 durch das Lenkelement 6 erhalten.

Konkret ist das Lenkelement 6 mit dem Vorschaltorbitrol 7 über ein geeignetes Verbindungselement 10 verbunden, beispielsweise eine Verbindungswelle oder ein Verbindungsgetriebe. Das Vorschaltorbitrol 7 ist in einen geschlossenen Hydraulikkreislauf 11 eingebunden. Dieser umfasst neben den Verbindungsleitungen 12 und 13 einen Motor 14. Der Motor 14 ist abtriebsseitig über eine weitere Verbindungseinrichtung 15, beispielsweise eine Welle oder ein Getriebe, mit dem Aktororbitrol 8 verbunden. Die Bewegung des Lenkelements 6 treibt somit die Verstellbewegung des Vorschaltorbitrols 7 an. Der durch die Verstellung des Vorschaltorbitrols 7 im geschlossenen Hydraulikkreislauf 11 ausgelöste, verstärkte, Hydraulikfluidstrom treibt letztlich den Motor 14 an. Abtriebsseitig des Motors 14 erfolgt die Anbindung an das Aktororbitrol 8, sodass insgesamt die Verstellung des Vorschaltorbitrol 7 durch das Lenkelement 6 eine Verstellung des Aktororbitrol 8 antreibt. Der durch die Verstellung des Aktororbitrol 8 ausgelöste Volumenstrom dient letztendlich der Lenkverstellung des Lenkaktors 9, über den die Lenkbewegungen der Fahreinrichtungen 2 angetrieben werden.

Zur Hydraulikfluidversorgung des Vorschaltorbitrols 7 und des Aktororbitrols 8 sind die Pumpen 16A und 16B vorgesehen, wobei alternativ beide auch über eine gemeinsame Pumpe mit Hydraulikfluid versorgt werden können. Die Pumpen 16A und 16B fördern aus einem Tank 17 Hydraulikfluid über die Leitung 18 zum Vorschaltorbitrol 7 und über eine Leitung 20 zum Aktororbitrol 8. Die Pumpen 16 werden beispielsweise durch ein Pumpenverteilergetriebe oder einen Nebenabtrieb des Antriebsmotors angetrieben und müssen nicht zwangsläufig exklusiv zur Versorgung der Orbitrole 7 und 8 genutzt werden, können aber. Dies ist mit dem Bezugszeichen 43 angegeben. Idealerweise erfolgt der Antrieb der beiden Pumpen über ein und dasselbe Pumpenverteilergetriebe oder ein und denselben Nebenabtrieb. Abgehend vom Vorschaltorbitrol 7 erfolgt eine Weiterleitung über die Leitung 19 zum Tank 17. Das Aktororbitrol 8 steht über die Leitung 20 in Fluidverbindung mit dem Tank 17. Abgehend von der Leitung 19 zum Aktororbitrol sowie ausgangsseitig zur Leitung 20 sind jeweils Druckbegrenzungsventils 21 vorgesehen. Vom Aktororbitrol 8 abgehend sind zwei Antriebsleitungen 22 und 23 vorgesehen, die in Fluidverbindung mit dem Lenkaktor 9 stehen.

Teil des geschlossenen Hydraulikkreislaufs 11 ist ferner eine Einrichtung 24 zur Druckvorspannung sowie Druckbegrenzung. Diese ist in Leitungsverbindung zwischen den Verbindungsleitungen 12 und 13 angeordnet und umfasst Rückschlagventile 25 sowie parallel dazu Druckbegrenzungsventile 26. Die Einrichtung 24 zur Druckvorspannung ermöglicht somit einerseits die Aufrechterhaltung eines gewünschten Druckniveaus innerhalb des geschlossenen Hydraulikkreislaufes 11 und dient andererseits der Vermeidung übermäßiger Belastungszustände, die beispielsweise dann auftreten können, wenn der Lenkaktor 9 den maximalen Lenkwinkel erreicht hat, der Bediener jedoch weiterhin am Lenkelement den Lenkwinkel vergrößern möchte. Durch die verstärkende Funktion des Vorschaltorbitrols 7 steigt in Folge der Druck im geschlossenen Kreis, so dass die vorliegende Druckabsicherung aktiv wird. Es kann vorgesehen sein, dass die Einrichtung 24 zur Druckvorspannung als eigenes Modul ausgebildet ist, wie in Figur 7 durch den gestrichelten Kasten angedeutet. Es kann auch vorgesehen sein, dass die gesamte Vorsteuerstufe, umfassend das Vorschaltorbitrol 7, die Anschlüsse zu Leitungsverbindungen zur Pumpe und zum Tank, die Einrichtung 24 sowie die Anbindung zum Aktororbitrol 8, d.h. der zwischen dem Lenkrad 6 und dem Aktororbitrol 8 liegende Teil, d.h. die Vorsteuerstufe an sich, als eigenes Modul ausgebildet ist.

Ferner kann die Gesamtheit aus Lenkelement 6 und Vorschaltorbitrol 7 ebenfalls ein eigenes Modul 27 bilden. Bevorzugt ist ferner bekanntermaßen der Motor 14 als ein eigenständiges Modul ausgebildet, wie auch das Aktororbitrol 8 (Modul 28). Die Verbindung der einzelnen Module 14, 24, 27 und 28 erfolgt über die vorstehend bereits genannten Verbindungsleitungen, wobei insbesondere die zwischen den einzelnen Modulen verlaufenden Teile, insbesondere abgehend vom Modul 27, der Verbindungsleitungen als flexible Hydraulikschläuche ausgebildet sein können.

Ein wesentlicher Effekt der in Figur 7 gezeigten Grundanordnung ist insbesondere die schrittweise Lenkkraftverstärkung der über das Lenkelement 6 eingebrachten Stellkraft über zunächst das Vorschaltorbitrol 7 hin zum Aktororbitrol 8 und von diesem ausgehend hin zum Lenkaktor 9. Damit gelingt es insbesondere auch, Druckverluste am Motor 14 und/oder in den Verbindungsleitungen, insbesondere den Leitungen 12 und 13, auszugleichen oder abzufangen, damit die am Lenkrad aufzubringenden Lenkkräfte im Idealfall nur sehr wenig schwanken oder idealerweise sogar gleich bleiben. Dadurch wird ein von Druckverlusten/Widerständen in den Leitungen 12 und 13 und/oder am Motor 14 unabhängiges Betätigungsumfeld für die Lenkeinrichtung 6 bereit gestellt, was von einem Bediener als äußerst komfortabel empfunden wird.

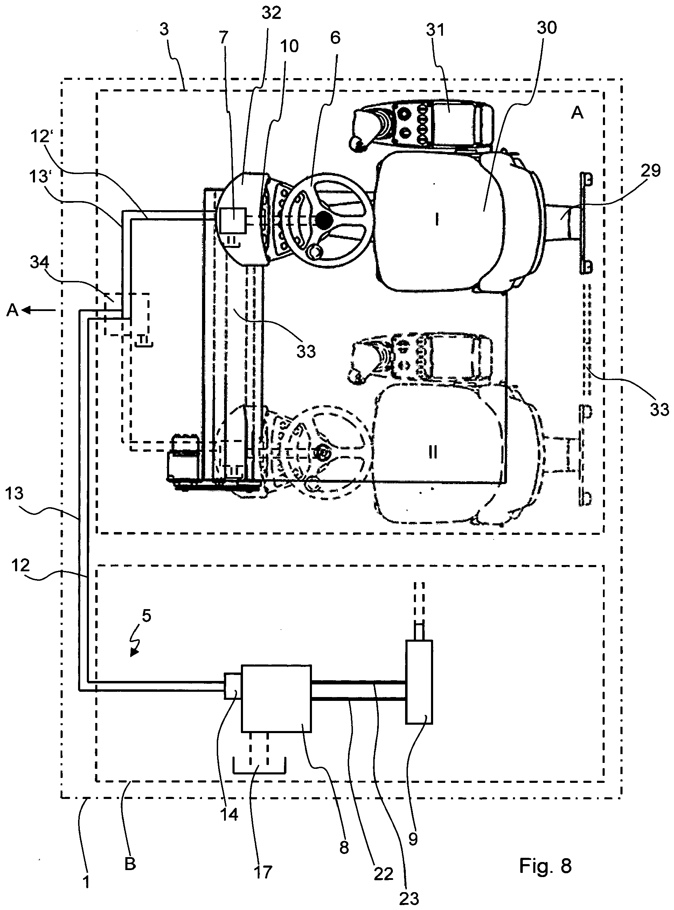

Das in Figur 7 gezeigte Grundprinzip eignet sich besonders zur Integration in einen Fahrstand 3 mit verstellbaren Bedienpositionen. Die in Figur 7 enthaltene gestrichelte Linie zergliedert die Lenkeinrichtung 5 dabei in einen Fahrstandteil A und einen Maschinenrahmenteil B. Diejenigen Elemente, die im Bereich des Fahrstandteils A angezeigt sind, werden somit bevorzugt innerhalb des Fahrstandes oder zumindest an diesem angeordnet, insbesondere an einem verstellbaren Teil, wie beispielsweise einem verstellbarem Bedienarbeitsplatz, wohingegen die im Maschinenrahmen Teil B liegenden Elemente aus Figur 7 bevorzugt am Maschinenrahmen, in einem Motorraum und/oder zumindest ortsfest relativ zu einem Antriebsmotor der Baumaschine 1 angeordnet werden. Dies verdeutlicht die Figur 8 weiter. Zur konkreten Ausbildung der Lenkeinrichtung aus Fig. 8 wird auf Fig. 7 Bezug genommen.

Figur 8 zeigt zunächst einen Fahrstand 3 mit einem Bedienschlitten 29, umfassend einen Fahrersitz 30, eine Bedienkonsole 31, das Lenkelement 6 und eine Bediensäule 32. Der Bedienschlitten 29 ist mit diesen Elementen über eine Führungseinrichtung 33 zwischen zwei Endpositionen I und II quer zur Arbeitsrichtung Ar verschiebbar. In Figur 8 befindet sich der Bedienschlitten 29 in der Position I, die Position II ist gestrichelt angedeutet. Anstelle des Bedienschlittens 29 kann beispielsweise auch eine um eine vertikale Achse drehbare Bedienplattform oder Ähnliches verwendet werden. Die Leitungsabschnitte 12' und 13' als Teil der Verbindungsleitungen 12 und 13 zwischen dem Vorschaltorbitrol 7 und dem Aktororbitrol 8 sind als flexible Leitungen ausgebildet, die über eine Verbindungsstelle 34 mit den weiteren Abschnitten der Verbindungsleitungen 12 und 13, die teilweise auch feststehende Rohrleitungen sein können, verbunden. Die Verbindungsstelle 34 ist quer zur Arbeitsrichtung A gesehen ungefähr mittig zwischen den beiden Positionen I und II angeordnet. Erfolgt die vorstehend beschriebene Fernbedienung des Lenkaktors 9 ausgehend vom Lenkelement 6, ist zur Übertragung des Lenkbefehls weder eine elektrische noch eine mechanische Schnittstelle erforderlich. Es sind in der gesamten Lenkeinrichtung 5 überhaupt keine gesonderten Anpassungsmaßnahmen nötig, um die Lenkeinrichtung 5 auf die verschiedenen Positionen I und II anzupassen, da die flexiblen Leitungsabschnitte 12' und 13' etwaige Positionsänderungen zwischen dem Vorschaltorbitrol 7 und der Verbindungsstelle 34 respektive dem Aktororbitrol 8 ausgleichen.

Figur 8 verdeutlicht ferner einen weiteren Vorteil der Lenkeinrichtung 5. Sowohl das Vorschaltorbitrol 7 als auch das Aktororbitrol 8 stellen jeweils eine Verstärkungsstufe der über das Lenkelement 6 aufgebrachten Lenkkraft dar. Durch das Vorschaltorbitrol 7 lassen sich die hydraulisch mechanischen Verluste im geschlossenen Kreis 11 sowie am Motor 14 für den Bediener egalisieren, die sich bei Verwendung einer Verdrängereinheit ohne Verstärkungsfunktion, d.h. insbesondere einem reinen Gerotor, unmittelbar als zusätzliche aufzubringende Betätigungskraft am Lenkelement 6 aufsummieren würden und vom Bediener als störend empfunden werden. Da das benötigte Eingangsmoment im nachfolgenden Aktororbitrol 8 niedrig ist, muss im geschlossenen Kreis 11 des Vorschaltorbitrols 7 nur ein Bruchteil der Leistung übertragen werden, die vom Leistungspfad von Aktororbitrol 8 zum Lenkaktor 9 und von dort zur Lenkvorrichtung 44 übertragen werden muss. Infolgedessen stellt sich bei gegebener hydraulischer Übersetzung im geschlossenen Kreis 11 ein niedriges Druckniveau und/oder ein geringer Volumenstrom ein ("geringe Leistung") was wiederum die Verwendung von Hydraulikschläuchen mit kleinen Nennweiten (z.B. 6mm Durchmesser) und/oder die Verwendung von niedrigeren Druckfestigkeiten (z.B. Hydraulikschläuche der "Leichten Reihe" statt der "Schweren Reihe", wie in DIN 20066 definiert), insbesondere in den Schlauchabschnitten 12 und 13, ermöglicht. Im "Leistungspfad" (Leitungen 22 und 23 zwischen Aktororbitrol 8 und Lenkaktor 9) werden dagegen vorliegend bevorzugt Schläuche der schweren Reihe (DIN 20066), z.B. mit einem Nenndurchmesser von 12 mm, verwendet. Durch die weitere durch das Aktororbitrol 8 erfolgende Verstärkung können die nun mit größeren Nennweiten zu verwendenden Hydraulikschläuche der Verbindungsleitungen 20 und 23 zum Lenkaktor 9 allerdings vergleichweise kurz gehalten werden, nicht zuletzt auch aufgrund der räumlichen Trennung der beiden Orbitrole 7 und 8, was eine Anordnung des Aktororbitrols 8 in räumlicher Nähe zum Lenkaktor 9 und somit kurze Wege mit hoher Leistungsübertragung ermöglicht. Dies ist insbesondere auch in Kostenhinsicht ein wesentlicher Vorteil.

Figur 10 fast schließlich wesentliche Schritte des erfindungsgemäßen Verfahrens zusammen. Ausgehend von einem manuellen Eingeben einer Lenkbewegung im Schritt 35 erfolgt dadurch ein Antreiben 36 einer Verstellbewegung des Vorschaltorbitrols 7. Dies ermöglicht ein Verstärken 37 der über das Lenkelement 6 eingegebenen Stellkraft. Es erfolgt ein Weiterleiten 38 der verstärkten Stellkraft über einen Hydrostaten bzw. geschlossenen Hydraulikkreislauf zum Antreiben 39 des Aktororbitrols 8. Durch das dadurch erreichte Verstellen des Aktororbitrols erfolgt ausgangsseitig des Aktororbitrols eine erneute Stellkraftverstärkung im Schritt 40. Mit dem nun erzeugten Hydraulikfluss erfolgt schließlich ein Antreiben 41 der Stellbewegung des Lenkaktors 9. Insgesamt sieht dieses Verfahren somit eine zweistufige, nacheinander ablaufende Stellkraftverstärkung vor, wobei hier auch weitere Verstärkungsstufen enthalten sein können und von der Erfindung mit umfasst sind.

## Patentansprüche

1. Baumaschine (1), insbesondere Straßenbaumaschine, die eine Lenkeinrichtung (5) aufweist, die Lenkeinrichtung (5) umfassend
a) ein Lenkelement (6) zur manuellen Eingabe von Lenkbefehlen,
b) einen Lenkaktor (9) zum Antrieb einer Lenkeinstellung einer Lenkvorrichtung (44) eines Fahrwerks der Baumaschine (1); und
c) eine Übertragungseinrichtung (42), die zwischen dem Lenkelement (6) und dem Lenkaktor (9) angeordnet ist, wobei die Übertragungseinrichtung (42) ein Aktororbitrol (8) zum Antrieb des Lenkaktors (9) aufweist,
wobei ein Vorschaltorbitrol (7) vorhanden ist, wobei das Vorschaltorbitrol (7) zwischen dem Lenkelement (6) und dem Aktororbitrol (8) derart angeordnet ist, dass es einerseits vom Lenkelement (6) angetrieben wird und andererseits das Aktororbitrol (8) antreibt,
**dadurch gekennzeichnet,**
**dass** die Baumaschine (1) einen Fahrstand (3) aufweist, der in Bezug auf eine Bedienposition wenigstens teilweise zwischen zwei alternativen Bedienpositionen (I, II) verstellbar ist, wobei das Lenkelement (6) Teil einer Bedienplattform oder eines Bedienschlittens (29) ist, wobei die Bedienplattform oder der Bedienschlitten (29) quer zur Arbeitsrichtung (A) der Baumaschine (1) und/oder um eine vertikale Achse verschwenkbar ist, und wobei das Vorschaltorbitrol (7) in die Bedienplattform oder den Bedienschlitten (29) integriert ist und bei einer Verstellung mit der Bedienplattform oder dem Bedienschlitten (29) mitgeführt wird.

2. Baumaschine (1) gemäß Anspruch 1,
**dadurch gekennzeichnet,**
**dass** zum Antrieb des Aktororbitrols (8) durch das Vorschaltorbitrol (7) ein Hydromotor (14) vorhanden ist, der in hydraulischer Leitungsverbindung (12, 13) mit dem Vorschaltorbitrol (7) steht, und der abtriebsseitig eine Bewegungsübertragungseinrichtung (15), insbesondere eine Welle oder eine Getriebe, zum Aktororbitrol (8) aufweist.

3. Baumaschine (1) gemäß einem der vorhergehenden Ansprüche,
**dadurch gekennzeichnet,**
**dass** das Vorschaltorbitrol (7) mit dem Aktororbitrol (8) über einen geschlossenen Hydraulickreis (11) miteinander wirkverbunden sind.

4. Baumaschine (1) gemäß Anspruch 3,
**dadurch gekennzeichnet,**
**dass** im geschlossenen Hydraulikkreis (11) eine Einrichtung (24) zur Druckvorspannung vorhanden ist.

5. Baumaschine (1) gemäß Anspruch 4,
**dadurch gekennzeichnet,**
**dass** die Einrichtung (24) zur Druckvorspannung über eine Pumpe (16) mit Hydraulikfluid versorgt wird.

6. Baumaschine (1) gemäß einem der vorhergehenden Ansprüche,
**dadurch gekennzeichnet,**
**dass** die Nennweiten von Verbindungsleitungen (22, 23) vom Aktororbitrol (8) zum Lenkaktor um wenigstens den Faktor1,5, insbesondere um wenigstens den Faktor 2 und ganz besonders um wenigstens den Faktor 3 größer sind als die Nennweiten von Verbindungsleitungen (12, 13) im geschlossenen Hydraulikkreis (11).

7. Baumaschine (1) gemäß einem der vorhergehenden Ansprüche,
**dadurch gekennzeichnet,**
das Vorschaltorbitrol und das Aktororbitrol über getrennte Pumpen (16a, 16b) oder über eine gemeinsame Pumpe versorgt werden

8. Baumaschine (1) gemäß einem der vorhergehenden Ansprüche,
**dadurch gekennzeichnet,**
**dass** das Vorschaltorbitrol (7) eine mit dem Lenkelement (6) zusammenhängende Baueinheit 27) bildet.

9. Baumaschine (1) gemäß einem der vorhergehenden Ansprüche,
**dadurch gekennzeichnet,**
**dass** sie wenigstens eines der folgenden Merkmale umfasst:
- wenigstens das Lenkelement (6) ist quer zur Arbeitsrichtung (A) der Baumaschine (1) verstellbar, insbesondere verschiebbar;
- wenigstens das Lenkelement (6) ist um eine vertikal Achse verschwenkbar.

10. Baumaschine (1) gemäß einem der vorhergehenden Ansprüche,
**dadurch gekennzeichnet,**
**dass** das Aktororbitrol (8) außerhalb der Fahrstandes (3), insbesondere in seiner Relativposition ortsfest zum Antriebsmotor der Baumaschine (1) und/oder im Motorraum und/oder am Maschinenrahmen, angeordnet ist.

11. Baumaschine (1) gemäß einem der vorhergehenden Ansprüche,
**dadurch gekennzeichnet,**
**dass** die Lenkpumpe (16) des Vorschaltorbitrols (7) und/oder des Aktororbitrols (8) über ein Pumpenverteilergetriebe (43) oder einen Nebenabtrieb (43) des Antriebsmotors angetrieben wird.

12. Verfahren zum Lenken einer Baumaschine (1) gemäß den vorhergehenden Ansprüchen mit einer Lenkeinrichtung (5), umfassend die Schritte:
a) Aufnehmen, Verstärken und Weiterleiten einer manuellen Lenkeingabe durch ein Vorschaltorbitrol (7);
b) Antreiben eines Aktororbitrols (8) mithilfe des Vorschaltorbitrols (7);
c) Antreiben eines Lenkaktors (9) mithilfe des Aktororbitrols (8).

13. Verfahren gemäß Anspruch 12,
**dadurch gekennzeichnet,**
**dass** im Schritt c) durch das Aktororbitrol (8) ebenfalls ein Verstärken der Lenkkraft zum Lenkaktor (9) erfolgt.

## Claims

1. Construction machine (1), particularly a road construction machine, including a steering device (5), the steering device (5) comprising
a) a steering element (6) for manual input of steering commands,
b) a steering actuator (9) for driving a steering adjustment of a steering apparatus (44) of a travel unit of the construction machine (1); and
c) a transmission device (42), which is arranged between the steering element (6) and the steering actuator (9), the transmission device (42) including an actuator orbitrol (8) for driving the steering actuator (9),
in which an upstream orbitrol (7) is provided, said upstream orbitrol (7) being arranged between the steering element (6) and the actuator orbitrol (8) in such a way that, on the one hand, it is driven by the steering element (6) and, on the other hand, it drives the actuator orbitrol (8)
**characterized in that**
the construction machine (1) includes an operator platform (3), which, with respect to an operating position, is at least partly adjustable between two alternative operating positions (I, II), the steering element (6) is part of a control platform or a control slide (29), which control platform or control slide (29) can be swivelled transversely to the working direction (A) of the construction machine (1) and/or about a vertical axis the, and the upstream orbitrol (7) is integrated in the control platform or control slide (29) and carried along with the control platform or control slide (29) during an adjustment.

2. The construction machine (1) according to claim 1,
**characterized in that**
a hydraulic motor (14), which is connected to the upstream orbitrol (7) via hydraulic lines (12, 13) and which has a movement transmission device (15) on its output side towards the actuator orbitrol (8), particularly a shaft or a gearbox, is provided for driving the actuator orbitrol (8) through the upstream orbitrol (7).

3. The construction machine (1) according to any one of the preceding claims,
**characterized in that**
the upstream orbitrol (7) is operatively connected with the actuator orbitrol (8) via a closed hydraulic circuit (11).

4. The construction machine (1) according to claim 3,
**characterized in that**
a device (24) for pressure pre-tensioning is provided in the closed hydraulic circuit (11).

5. The construction machine (1) according to claim 4,
**characterized in that**
hydraulic fluid is supplied to the device (24) for pressure pre-tensioning via a pump (16).

6. The construction machine (1) according to any one of the preceding claims,
**characterized in that**
the nominal diameters of connecting lines (22, 23) from the actuator orbitrol (8) to the steering actuator are larger than the nominal diameters of connecting lines (12, 13) in the closed hydraulic circuit (11) by at least the factor of 1.5, particularly by at least the factor of 2, and more particularly by at least the factor of 3.

7. The construction machine (1) according to any one of the preceding claims,
**characterized in that**
the upstream orbitrol and the actuator orbitrol are supplied via separate pumps (16a, 16b) or via a common pump.

8. The construction machine (1) according to any one of the preceding claims,
**characterized in that**
the upstream orbitrol (7) forms an interrelated constructional unit (27) with the steering element (6).

9. The construction machine (1) according to any one of the preceding claims,
**characterized in that**
comprising at least one of the following features:
- at least the steering element (6) is adjustable, particularly displaceable, transversely to the working direction (A) of the construction machine (1);
- at least the steering element (6) can be swivelled about a vertical axis.

10. The construction machine (1) according to any one of the preceding claims,
**characterized in that**
the actuator orbitrol (8) is arranged outside the operator platform (3), particularly stationary in its relative position to the drive engine of the construction machine (1) and/or in the engine compartment and/or on the machine frame.

11. The construction machine (1) according to any one of the preceding claims,
**characterized in that**
the steering pump (16) of the upstream orbitrol (7) and/or the actuator orbitrol (8) is driven via a pump transfer gear (43) or a power take-off (43) of the drive engine.

12. A method for steering a construction machine (1) according to any of the preceding claims, comprising the steps of:
a) receiving, enhancing, and transferring a manual steering input by an upstream orbitrol (7);
b) driving an actuator orbitrol (8) by means of the upstream orbitrol (7);
c) driving a steering actuator (9) by means of the actuator orbitrol (8).

13. The method according to claim 12,
**characterized in that**
the steering force applied to the steering actuator (9) is also enhanced by the actuator orbitrol (8) in step c).

## Revendications

1. Engin de chantier (1), en particulier engin pour travaux routiers, comprenant un système de direction (5), le système de direction (5) comprenant:
a) un élément de direction (6) pour l'entrée manuelle de commandes de direction,
b) un actionneur de direction (9) pour entraîner un réglage de direction d'un dispositif (44) de direction d'une unité de déplacement de l'engin de chantier (1) ; et
c) un dispositif de transmission (42) qui est disposé entre l'élément de direction (6) et l'actionneur de direction (9), le dispositif de transmission (42) comprenant un orbitrol (8) d'actionneur pour entraîner l'actionneur de direction (9),
dans lequel un orbitrol amont (7) est présent, ledit orbitrol amont (7) étant disposé entre l'élément de direction (6) et l'orbitrol (8) de l'actionneur d'une façon telle que, d'une part, il est entraîné par l'élément de direction (6) et, d'autre part, il entraîne l'orbitrol (8) de l'actionneur, **caractérisé en ce que**
l'engin de chantier (1) comprend un poste de pilotage (3) qui, par rapport à une position d'utilisation, est réglable, au moins partiellement, entre deux positions d'utilisation alternatives (I, II), l'élément de direction (6) fait partie d'une plateforme de commande ou d'un coulisseau de commande (29), ladite plateforme de commande ou ledit coulisseau de commande (29) peut être pivoté(e) transversalement au sens de déplacement (A) de l'engin de chantier (1) et/ou autour d'un axe vertical, et l'orbitrol amont (7) est intégré à la plateforme de commande ou au coulisseau de commande (29) et est déplacé en même temps que la plateforme de commande ou le coulisseau de commande (29) pendant un réglage.

2. Engin de chantier (1) selon la revendication 1,
**caractérisé en ce que**
un moteur hydraulique (14), qui est relié à l'orbitrol amont (7) par l'intermédiaire de canalisations hydrauliques (12, 13) et qui possède un dispositif (15) de transmission du mouvement sur son côté sortie vers l'orbitrol (8) de l'actionneur, en particulier un arbre ou une boîte de transmission, est présent pour entraîner l'arbitrol (8) de l'actionneur via l'orbitrol amont (7).

3. Engin de chantier (1) selon l'une quelconque des revendications précédentes,
**caractérisé en ce que**
l'orbitrol amont (7) est raccordé opérationnellement à l'orbitrol (8) de l'actionneur par l'intermédiaire d'un circuit hydraulique fermé (11).

4. Engin de chantier (1) selon la revendication 3,
**caractérisé en ce que**
un dispositif (24) de précontrainte de compression est présent dans le circuit hydraulique fermé (11).

5. Engin de chantier (1) selon la revendication 4,
**caractérisé en ce que**
du fluide hydraulique est fourni au dispositif (24) pour la précontrainte de compression via une pompe (16).

6. Engin de chantier (1) selon l'une quelconque des revendications précédentes,
**caractérisé en ce que**
les diamètres nominaux de canalisations de raccordement (22, 23) allant de l'orbitrol (8) de l'actionneur à l'actionneur de direction sont supérieurs aux diamètres nominaux des canalisations de raccordement (12, 13) dans le circuit hydraulique fermé (11) d'un facteur de 1,5 au moins, en particulier d'un facteur de 2 au moins, et tout particulièrement d'un facteur de 3 au moins.

7. Engin de chantier (1) selon l'une quelconque des revendications précédentes,
**caractérisé en ce que**
l'orbitrol amont et l'orbitrol de l'actionneur sont alimentés par des pompes distinctes (16a, 16b) ou par une pompe commune.

8. Engin de chantier (1) selon l'une quelconque des revendications précédentes,
**caractérisé en ce que**
l'orbitrol amont (7) forme une unité constructive (27) interdépendante avec l'élément de direction (6).

9. Engin de chantier (1) selon l'une quelconque des revendications précédentes,
**caractérisé en ce que**
il comprend au moins l'une des caractéristiques suivantes :
- au moins l'élément de direction (6) est réglable, et en particulier déplaçable, transversalement au sens de déplacement (A) de l'engin de chantier (1);
- au moins l'élément de direction (6) peut pivoter autour d'un axe vertical.

10. Engin de chantier (1) selon l'une quelconque des revendications précédentes,
**caractérisé en ce que**
l'arbitrol (8) de l'actionneur est disposé à l'extérieur du poste de pilotage (3), en particulier de manière fixe dans sa position relative par rapport au moteur d'entraînement de l'engin de chantier (1) et/ou dans le compartiment moteur et/ou sur le châssis de l'engin.

11. Engin de chantier (1) selon l'une quelconque des revendications précédentes,
**caractérisé en ce que**
la pompe (16) de direction de l'orbitrol amont (7) et/ou de l'orbitrol (8) de l'actionneur est entraînée via un mécanisme (43) de distribution des pompes ou une prise de force (43) du moteur d'entraînement.

12. Procédé pour diriger un engin de chantier (1) selon l'une quelconque des revendications précédentes,
comprenant les étapes de:
a) réception, augmentation, et transfert d'un effort de braquage manuel par un orbitrol amont (7);
b) entraînement d'un orbitrol (8) de l'actionneur au moyen de l'orbitrol amont (7);
c) entraînement d'un actionneur (9) de direction au moyen de l'orbitrol (8) de l'actionneur.

13. Procédé selon la revendication 12,
**caractérisé en ce que**
la force de braquage appliquée à l'actionneur (9) de direction est également augmentée par l'orbitrol (8) de l'actionneur à l'étape c).
